# EUROPÄISCHE PATENTANMELDUNG

(11) **EP 2 815 831 A1**
(43) Veröffentlichungstag der Anmeldung: **24.12.2014**
(21) Anmeldenummer: 14001594.2
(22) Anmeldetag: 06.05.2014
(51) Int. Cl.: B23D 31/00, F15B 15/18

(54) **Bruchtrennvorrichtung**

(30) Priorität: 16.05.2013 DE 102013008371
(71) Anmelder: Alfing Kessler Sondermaschinen GmbH, 73433 Aalen (DE)
(72) Erfinder: Schwab, Peter, 73431 Aalen (DE)
(74) Vertreter: Bregenzer, Michael

(57) **Zusammenfassung**

Die Erfindung betrifft eine Bruchtrennvorrichtung zum Bruchtrennen eines Motorbauteils (80), insbesondere eines Pleuels (81), mit einer Spreizelementanordnung (48) mit mindestens einem ersten Spreizelement und einem Betätigungskörper (43) zum Betätigen des mindestens einen ersten Spreizelements in eine Spreizstellung zum Abtrennen einer ersten Komponente des Motorbauteils (80), insbesondere eines Pleueldeckels (86), von einer zweiten Komponente des Motorbauteils (80), insbesondere einem Pleuelfuß (85), wobei zwischen dem Betätigungskörper (43) und dem mindestens einen ersten Spreizelement (41) ein Umlenkgetriebe, insbesondere eine Keilflächenanordnung (46), vorgesehen ist und der Betätigungskörper (43) durch einen Spreizantrieb (50) antreibbar ist, und wobei die Bruchtrennvorrichtung eine Werkstück-Halteanordnung (12) mit mindestens einer Abstützeinrichtung (14-17) zum Abstützen des Motorbauteils (80) für das Bruchtrennen aufweist. Bei der Bruchtrennvorrichtung ist vorgesehen, dass ein Stützantrieb (90-93 ) der Abstützeinrichtung (14-17) zum Verstellen eines Stützelements (18-21) in eine das Motorbauteil (80) abstützende Stützstellung und/oder der Spreizantrieb (50) einen hydraulischen Linearantrieb (51; 151) aufweist, der als eine integrale Antriebsbaueinheit (75; 175) einen anhand eines Hydraulikfluids (F) antreibbaren Hydraulikzylinder (53, 153) und eine Hydraulikpumpe (54; 154) zum Erzeugen eines Antriebsdrucks des Hydraulikfluids (F) umfasst.

## Beschreibung

Die Erfindung betrifft eine Bruchtrennvorrichtung zum Bruchtrennen eines Motorbauteils, insbesondere eines Pleuels, mit einer Spreizelementanordnung mit mindestens einem ersten Spreizelement und einem Betätigungskörper zum Betätigen des mindestens einen ersten Spreizelements in eine Spreizstellung zum Abtrennen einer ersten Komponente des Motorbauteils, insbesondere eines Pleueldeckels, von einer zweiten Komponente des Motorbauteils, insbesondere einem Pleuelfuß, wobei zwischen dem Betätigungskörper und dem mindestens einen ersten Spreizelement ein Umlenkgetriebe, insbesondere eine Keilflächenanordnung, vorgesehen ist und der Betätigungskörper durch einen Spreizantrieb antreibbar ist, und wobei die Bruchtrennvorrichtung eine Werkstück-Halteanordnung mit mindestens einer Abstützeinrichtung zum Abstützen des Motorbauteils für das Bruchtrennen aufweist.

Eine derartige Bruchtrennvorrichtung ist z.B. in EP 0 661 125 A1 beschrieben. Die Bruchtrennvorrichtung weist beispielsweise einen hydraulischen Antrieb zum Antreiben des Betätigungskörpers auf. Hydraulische Antriebe können jedoch zu einer Leckage neigen.

Es ist daher die Aufgabe der vorliegenden Erfindung, eine verbesserte Bruchtrennvorrichtung bereitzustellen.

Zur Lösung der Aufgabe ist bei einer Bruchtrennvorrichtung der eingangs genannten Art vorgesehen, dass ein Stützantrieb der Abstützeinrichtung zum Verstellen eines Stützelements in eine das Motorbauteil abstützende Stützstellung und/oder der Spreizantrieb einen hydraulischen Linearantrieb aufweist, der als eine integrale oder integrierte Antriebsbaueinheit einen anhand eines Hydraulikfluids antreibbaren Hydraulikzylinder und eine Hydraulikpumpe zum Erzeugen eines Antriebsdrucks des Hydraulikfluids umfasst.

Die Antriebsbaueinheit umfasst also die Hydraulikpumpe und den Hydraulikzylinder und bildet zweckmäßigerweise eine kompakte Baueinheit. Die Hydraulikpumpe und der Hydraulikzylinder sind in der Antriebsbaueinheit integral enthalten oder in dieser integriert.

Es ein Grundgedanke der vorliegenden Erfindung, dass ein zum Bruchtrennen eines Motorbauteils günstiger, hydraulischer Antrieb vorhanden ist, jedoch das Problem von Hydraulik-Leckagen deutlich kleiner ist, wenn nicht gar vollständig vermieden wird. Die kompakte Baueinheit, die den Hydraulikzylinder und die Hydraulikpumpe an Bord hat, bildet ein geschlossenes, sicheres System. Umwelteinflüsse auf die Antriebsbaueinheit können dieser nicht oder nur wenig anhaben, was insbesondere in der bei einer Werkstückbearbeitung häufig rauen und schmutzbehafteten Umgebung ein großer Vorteil ist. Im Gegensatz zu einem beispielsweise elektromechanischen Antrieb ist der hydraulische Linearantrieb bei der Bruchtrennvorrichtung gemäß der Erfindung deutlich robuster. Beispielsweise kommt es zu mechanischen Abdrücken oder Eindrücken ein immer derselben Stelle, wenn beispielsweise ein Kugel-Spindel-Linearantrieb als Spreizantrieb oder Stützantrieb eingesetzt wird.

Der Hydraulikzylinder ist vorzugsweise ein doppelt wirkender Hydraulikzylinder. Mithin ist es also möglich, dass der hydraulische Linearantrieb bidirektional arbeitet, nämlich beispielsweise in seiner Funktion als Spreizantrieb den Betätigungskörper in die Spreizstellung verstellt und auch wieder zurück oder in seiner Funktion als ein Stützantrieb das Stützelement in die Stützstellung und in eine von dem Werkstück oder Motorbauteil entfernte Lösestellung verstellt.

Eine vorteilhafte Ausführungsform der Erfindung sieht vor, dass neben dem Hydraulikzylinder und der Hydraulikpumpe auch der elektrische Pumpenantriebsmotor einen Bestandteil der Antriebsbaueinheit bildet. Somit sind alle wesentlichen Antriebskomponenten zum Betreiben des Hydraulikzylinder an Bord der Antriebsbaueinheit des hydraulischen Linearantriebs.

Das oder ein Gehäuse der Antriebsbaueinheit des Linearantriebs kann selbstverständlich mehrteilig sein, d.h. dass beispielsweise ein Zylindergehäuse des Hydraulikzylinders und ein Pumpengehäuse der Hydraulikpumpe oder deren Pumpenantriebsmotor oder beidem fest miteinander verbunden sind, so dass eine kompakte Gehäuse-Baueinheit entsteht. Beispielsweise sind die einzelnen Teil-Gehäuse, zum Beispiel das Zylindergehäuse und das Pumpengehäuse, fest miteinander verschraubt.

Bevorzugt ist ein modularer Aufbau des hydraulischen Linearantriebs, bei der der Hydraulikzylinder, die Hydraulikpumpe und gegebenenfalls ein Pumpenantriebsmotor in einer Reihenrichtung nebeneinander angeordnet sind. Der modulare Aufbau ist besonders wartungsfreundlich.

Es ist auch möglich, dass die Antriebsbaueinheit eine winkelige Gestalt hat. Z.B. sind der Hydraulikzylinder und ein Pumpenantriebsmotor an zueinander winkeligen Seiten der Hydraulikpumpe angeordnet.

Vorteilhaft ist die Antriebsbaueinheit als ein geschlossenes System für das Hydraulikfluid ausgestaltet.

Die Antriebsbaueinheit umfasst zweckmäßigerweise einen geschlossenen Kreislauf für das Hydraulikfluid.

Eine bevorzugte Ausführungsform der Erfindung sieht vor, dass keine Fluidleitungen für das Hydraulikfluid außerhalb eines Gehäuses der Antriebsbaueinheit verlaufen.

Eine bevorzugte Variante sieht vor, dass keine Fluidleitungen notwendig sind, die eine Positionierbewegung des Spreizantriebs und der Spreizelementanordnung mitmachen müssen.

Die Antriebsbaueinheit weist zweckmäßigerweise ausschließlich elektrische Anschlüsse auf, insbesondere zur elektrischen Energieversorgung. Eine externe Versorgung mit Hydraulikfluid ist also nicht notwendig.

Die Antriebsbaueinheit umfasst zweckmäßigerweise eine Ventilanordnung. Die Ventilanordnung kann beispielsweise Steuerventile umfassen. Bevorzugt ist es, wenn die Ventilanordnung eine Sicherheitsbeschaltung darstellt, beispielsweise Überdruckverhältnisse vermeidet. Es allerdings bevorzugt, wenn die Ventilanordnung nicht zur Ansteuerung des Hydraulikantriebs notwendig ist, das heißt dass die Antriebsbaueinheit des hydraulischen Linearantriebs keine Steuerventile zur hydraulischen Ansteuerung des Hydraulikzylinder aufweist.

Es ist bevorzugt, wenn die Antriebsbaueinheit einen Speicher für das Hydraulikfluid aufweist. Der Speicher ist vorzugsweise integral in die Antriebsbaueinheit oder deren Gehäuse eingebunden. Auf diese Weise benötigt man keine externe Fluidleitungen. Der Speicher kann ein offener Speicher sein. Bevorzugt ist der Speicher ein Ausgleichsbehälter oder umfasst einen Ausgleichsbehälter für das Hydraulikfluid.

Der Hydraulikzylinder und die Hydraulikpumpe sowie vorzugsweise mindestens eine weitere Komponente, beispielsweise ein Speicher für das Hydraulikfluid, eine Ventilanordnung, ein Pumpenantriebsmotor oder dergleichen, sind zweckmäßigerweise koaxial, insbesondere koaxial fluchtend. Die Koaxialität bezieht sich vorzugsweise auch auf einen Abtrieb des Hydraulikzylinders, beispielsweise eine Kolbenstange.

Die Hydraulikzylinder und die Hydraulikpumpe und zweckmäßigerweise mindestens eine weitere Komponente (Speicher, Ventilanordnung, Pumpenantriebsmotor oder dergleichen) sind also beispielsweise entlang einer Achsrichtung oder einer Reihenachse nebeneinander angeordnet.

In einer andere Formulierung könnte man auch sagen, dass der Hydraulikzylinder, die Hydraulikpumpe sowie vorzugsweise mindestens eine weitere Komponente nebeneinander angeordnet sind, insbesondere auch neben einem Abtrieb des Hydraulikzylinders. Die weitere Komponente umfasst wie gesagt beispielsweise einen Speicher für das Hydraulikfluid, eine Ventilanordnung oder beides.

Die Spreizelementanordnung einschließlich des Spreizantriebs und/oder die Werkstück-Halteanordnung sind zweckmäßigerweise mittels eines Positionierantriebs in eine zur Bearbeitung des Motorbauteils durch die Spreizelementanordnung geeignete Arbeitsposition relativ zueinander verstellbar. Der Positionierantrieb kann eine nur die Spreizelementanordnung und den Spreizantrieb betätigende Antriebseinheit umfassen. Es ist aber auch möglich, dass der Positionierantrieb die Werkstück-Halteanordnung mittels einer anderen Positionier-Antriebseinheit positioniert. Es ist festzuhalten, dass es genügt, wenn die Spreizelementanordnung zur Werkstück-Halteanordnung und mithin zum Werkstück bzw. Motorbauteil hin bewegbar ist. Auch die andere Variante würde funktionieren, nämlich dass die Werkstück-Halteanordnung relativ zur Spreizelementanordnung positioniert wird, so dass diese die Werkstück-Bearbeitung durchführen kann, nämlich das Bruchtrennen.

Der Positionierantrieb umfasst zweckmäßigerweise mindestens einen elektrischen Antriebsmotor, zum Beispiel einen elektrischen Drehantrieb oder Linearantrieb oder beides. Bevorzugt ist es, wenn der Positionierantrieb ausschließlich elektrische Antriebsmotoren aufweist. Bei dieser Ausführungsform wird deutlich, dass anhand des mindestens einen hydraulischen Linearantriebs die durch den Crack-Vorgang beanspruchten Maschinenkomponenten der Bruchtrennvorrichtung hydraulisch arbeiten, so dass die Rückwirkung vom Motorbauteil auf die Maschinenkomponenten bzw. den hydraulischen Linearantrieb durch die Hydraulik abgestützt und gedämpft wird, während für die Positionierung der Werkzeuge, nämlich der Spreizelementanordnung und dem Spreizantrieb und/oder die Positionierung der der Werkstück-Halteanordnung und mithin des Motorbauteils elektrische und somit wartungsarme Antriebsmotoren zum Einsatz kommen. Man kann sich bei einer Taktzeit von beispielsweise 10 Sekunden bei einem Bruchtrennen eines jeweiligen Pleuels vorstellen, dass erhebliche mechanische Belastungen von der Bruchtrennvorrichtung abzufangen sind.

Die Spreizelementanordnung einschließlich des Spreizantriebs ist zweckmäßigerweise an einem Schlitten angeordnet, der zu der Werkstück-Halteanordnung, insbesondere also auch zu dem Motorbauteil, hin und von dieser weg verstellbar ist, beispielsweise rotatorisch und/oder linear. Die lineare Verstellung ist bevorzugt. Der Schlitten ist beispielsweise anhand des Positionierantriebs oder einer Komponente davon verstellbar. Der Schlitten läuft beispielsweise an Schienen oder einer Linearführung entlang, die nach oben vor ein Maschinenbett oder eine Maschinenbasis der Bruchtrennvorrichtung vorsteht. Somit führt also der Schlitten/die Positioniereinrichtung die gesamte Anordnung bestehend aus Spreizelementanordnung und Spreizantrieb zu der Werkstück-Halteanordnung hin und wieder von dieser weg, so dass ein Werkstückwechsel, nämlich ein Wechsel des Pleuels oder Motorbauteils, möglich ist.

Eine Spreizachse, entlang derer die Spreizelementanordnung die erste Komponente des Motorbauteils von der zweiten Komponente des Motorbauteils trennt, und eine Stellachse, entlang derer die Spreizelementanordnung und/oder die Werkstück-Halteanordnung in eine oder die zur Bearbeitung des Motorbauteils durch die Spreizelementanordnung geeignete Arbeitsposition relativ zueinander verstellbar sind, sind vorzugsweise zu einander winkelig, beispielsweise rechtwinkelig. Auch diese Maßnahme vorteilhaft kann dazu beitragen, dass eine Rückwirkung durch den Bruchtrennvorgang entlang der Spreizachse von dem hydraulischen Linearantrieb abgefangen wird, während der in der Stellachse oder Positionierachse wirksame Positionierantrieb dadurch zumindest im Wesentlichen unbelastet bleibt. Beispielsweise ist die Spreizachse beim Betrieb der Bruchtrennvorrichtung im Wesentlichen horizontal, während die Positionierachse, entlang derer die Werkstück-Halteeinrichtung oder die Baugruppe umfassend die Spreizelementanordnung und den Spreizantrieb, verstellt wird, im Wesentlichen vertikal verläuft.

Bevorzugt ist vorgesehen, dass die Spreizelementanordnung zur Anordnung in einer Lageröffnung des Motorbauteils, zum Beispiel einem kleinen oder großen Auge eines Pleuels, ausgestaltet ist.

Das Umlenkgetriebe, z.B. die Keilflächen der Keilflächenanordnung, bewirkt eine Bewegungsumlenkung von einer Stellachse des Betätigungselements zu einer Spreizrichtung oder Spreizachse, in welcher die Bruchtrenneinrichtung die erste Komponente des Motorbauteils, zum Beispiel den Pleueldeckel, von der zweiten Komponente des Motorbauteils, zum Beispiel einem Pleuelfuß, abtrennt.

Die Keilflächenanordnung, die zum Beispiel ein Keilgetriebe bildet oder umfasst, ist besonders robust. Eine Keilflächenanordnung ist daher bevorzugt.

Das Umlenkgetriebe umfasst z.B. eine Keilflächenanordnung. Das Umlenkgetriebe kann aber auch ein Kurbelgetriebe, ein Kniehebelgetriebe, ein Exzentergetriebe oder dergleichen aufweisen.

Zu den Keilflächen der Keilflächenanordnung ist festzuhalten, dass es genügt, wenn beispielsweise der Betätigungskörper eine Keilfläche aufweist, während das zugeordnete Spreizelement keine Keilfläche aufweist oder auch umgekehrt, dass das Spreizelement eine Keilfläche hat, während der Betätigungskörper ohne eine Keilfläche an dieser Keilfläche des Spreizelements entlang gleitet. Besonders bevorzugt ist jedoch, wenn Paarungen von Keilflächen vorhanden sind, d.h. dass der Betätigungskörper mit einer Keilfläche an einer Keilfläche des Spreizelements entlang beweglich gelagert ist.

Die erfindungsgemäße Bruchtrennvorrichtung bildet vorzugsweise einen Bestandteil einer Werkzeugmaschine oder eines Bearbeitungszentrums oder beidem. Das Bearbeitungszentrum oder die Werkzeugmaschine kann beispielsweise auch eine Laseranordnung zur Herstellung von Laserkerben an den Motorbauteilen oder dergleichen umfassen.

Bevorzugt umfasst die Bruchtrennvorrichtung eine Werkstück-Fördereinrichtung, zum Beispiel einen Rundtisch, ein Kettenförderer oder dergleichen, zum Vorfördern der Motorbauteile zu der Werkstück-Halteanordnung hin oder von dieser weg oder beidem.

Allerdings kann die Erfindung auch vorsehen, dass die Bruchtrennvorrichtung für einen manuellen Werkstückwechsel ausgestaltet ist. Auch in diesem Fall ist eine Abstützeinrichtung vorhanden. Diese kann aber auch manuell betätigbar sein.

Die Spreizelementanordnung einschließlich des Spreizantriebs ist bei der Bruchtrennvorrichtung mit manuellem Werkstückwechsel ist zweckmäßigerweise unterhalb der Werkstück-Halteanordnung angeordnet, bei der Variante mit automatischem Werkstückwechsel oberhalb der Werkstück-Halteanordnung.

Nachfolgend werden Ausführungsbeispiele der Erfindung anhand der Zeichnung erläutert. Es zeigen:
- Figur 1: eine Seitenansicht einer Werkzeugmaschine, die eine Bruchtrennvorrichtung aufweist,

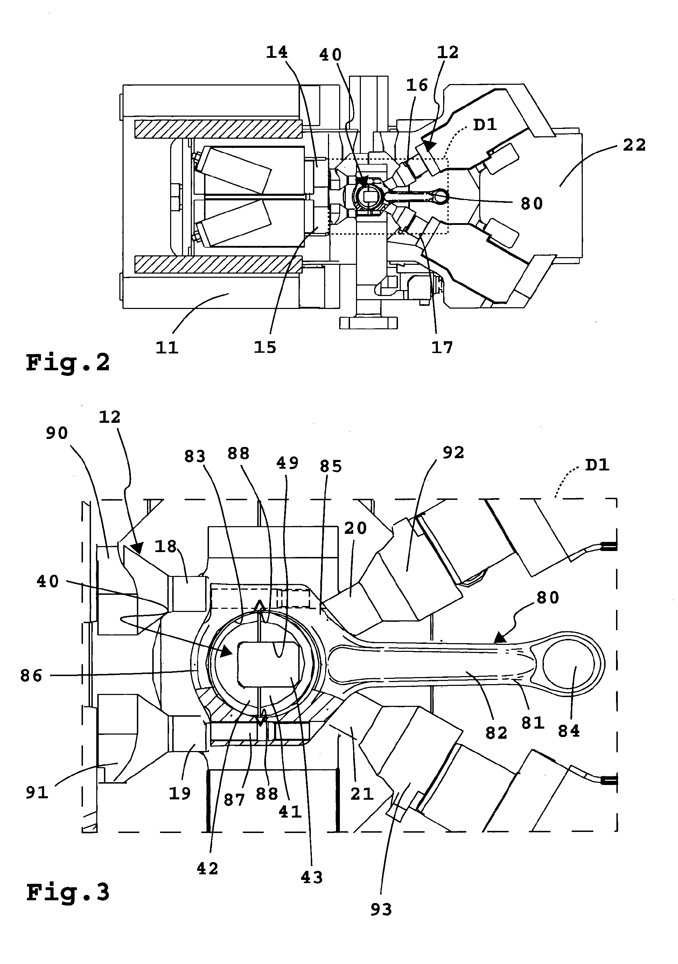

- Figur 2: eine frontale Draufsicht auf ein Unterteil der Werkzeugmaschine gemäß Figur 1 sowie eine Bruchtrennvorrichtung und eine Werkstück-Halteanordnung, von der in
- Figur 3: ein Detail D1 aus Figur 2 dargestellt ist, und
- Figur 4: eine schematische Ansicht der Bruchtrennvorrichtung gemäß Figuren 1-3.

Eine in der Zeichnung schematisch dargestellte Werkzeugmaschine 10, die auch ein Bearbeitungszentrum oder Bestandteil eines Bearbeitungszentrums sein kann, weist eine Bruchtrennvorrichtung 40 zum Bruchtrennen von Motorbauteilen 80 auf. Man könnte die Werkzeugmaschine 10 auch als Crack-Maschine bezeichnen.

Die Werkzeugmaschine 10 ist dazu vorgesehen, beispielsweise Pleuel 81 als Motorbauteile 80 zu bearbeiten, wobei ein alternatives Anwendungsfeld der Erfindung auch beispielsweise das Cracken von Zylinderdeckeln von einem Motorblock ist. Auch andere Werkstücke können im Prinzip nach dieser Art bruchgetrennt werden.

Die Pleuel 81 umfassen einen Pleuelschaft 82, der am einen Endbereich ein so genanntes kleines Auge 84, also eine Lagerbohrung oder Lagerausnehmung, sowie ein großes Auge 83 aufweist, ebenfalls eine Lagerbohrung oder Lagerausnehmung. Die beiden Lagerausnehmung oder Augen 83 und 84 sind beispielsweise zur drehbaren Verbindung mit einer Kurbelwelle und einem Kolben vorgesehen (nicht dargestellt).

Im Bereich des großen Auges 83 wird mit der Werkzeugmaschine 10 die nachfolgende Bearbeitung durchgeführt:
Von einem Pleuelfuß 85 wird mittels der Bruchtrennvorrichtung 40 ein Pleueldeckel 86 abgetrennt, so dass sich an den Seitenschenkeln des Pleuelfußes 85 und den Seitenschenkeln des Pleueldeckels 86, die jeweils das große Auge 83 seitlich begrenzen, Bruchtrennflächen ausbilden. Diese Bruchtrennflächen passen formschlüssig zueinander, da die Oberflächentopographie bei beiden Bruchtrennflächen im Idealfall identisch ist.

Die Werkzeugmaschine 10 und/oder das Bearbeitungszentrum können ein Kerbwerkzeug, zum Beispiel zum Laser-Kerben, aufweist, was in der Zeichnung jedoch nicht dargestellt ist. Jedenfalls sind vorteilhaft im Bereich der späteren Bruchtrennflächen oder -linien jeweils eine das Bruchtrennen erleichternde Kerbe 88 vorgesehen. Die Kerben 88 könnten aber auch schon von vorneherein an dem Pleuel 81 vorgesehen sein, beispielsweise wenn dieses als ein Gussteil oder Sinterteil hergestellt ist.

Die Werkzeugmaschine 10 umfasst eine Maschinenbasis 11, zum Beispiel ein Maschinenbett, an der eine Werkstück-Halteanordnung 12 angeordnet ist. Mit der Werkstück-Halteanordnung können Werkstücke, nämlich das Motorbauteil 80 oder das Pleuel 81, gehalten werden, während die weitere Bearbeitung durch die Bruchtrennvorrichtung 40 stattfindet. Die Werkstück-Halteanordnung 12 bildet einen Bestandteil der Bruchtrennvorrichtung 40.

Von unten her wird das Pleuel 81 oder Motorbauteil 80 von einer Werkstück-Stützeinrichtung 13 abgestützt. Die Stützeinrichtung 13 kann direkt an dem Motorbauteil 80 angreifen, dieses also direkt abstützen, oder auch beispielsweise eine Kassette 23, in der das Motorbauteil 80/Pleuel 81 angeordnet ist.

Während der Bearbeitung durch die Bruchtrennvorrichtung 40 ist das Pleuel 81 durch seitlich wirkende Abstützeinrichtungen 14, 15, 16, 17 abgestützt, deren z.B. als Stützköpfe ausgestaltete Stützelemente 18, 19 beispielsweise von der Seite des Pleueldeckels 86 her stützend wirken, während die Stützelemente 20 und 21 der Abstützeinrichtungen 16, 17 von der anderen Seite, nämlich vom Pleuelfuß 85 her abstützen. Somit ist jedenfalls das Pleuel 81 während der Bruchtrenn-Bearbeitung sicher gehalten.

Die Werkzeugmaschine 10 umfasst weiterhin einen Rundtisch 22 oder eine sonstige Werkstück-Fördereinrichtung, mit der Werkstücke, nämlich Motorbauteile 80 oder Pleuel 81 der Bruchtrennvorrichtung 40 zugeführt werden können bzw. auch von der Bruchtrennvorrichtung 40 wieder weg geführt werden können. Auf dem Rundtisch 22 sind beispielsweise Kassetten 23 angeordnet.

Vor die Maschinenbasis 11 steht ein Ständer 25 nach oben vor, der beispielsweise in der Art eines Turms, eines Tragrahmens oder dergleichen ausgestaltet ist. Der Ständer 25 trägt eine Führungsanordnung 26 oder bildet eine solche. Die Führungsanordnung 26 umfasst eine Linearführung 27, an der die Bruchtrennvorrichtung 40 linear geführt ist. Mithilfe eines Positionierantriebs 28, beispielsweise eines elektrischen Antriebs oder pneumatischen Antriebs oder fluidischen Antriebs, kann die Bruchtrennvorrichtung 40 zwischen einer unteren Arbeitsposition, in der sie zur Bearbeitung des Motorbauteils 80 oder Pleuels 81 bereitsteht und einer oberen Stellung, in der die Bruchtrennvorrichtung 40 von dem Motorbauteil 80/Pleuel 81 entfernt ist und ein Werkstückwechsel möglich ist, indem beispielsweise der Rundtisch 22 weiter schaltet und ein unbearbeitetes Werkstück zur weiteren Bearbeitung durch die Bruchtrennvorrichtung 40 zuführt, verstellt werden.

Vorliegend umfasst der Positionierantrieb 28 mindestens einen elektrischen Antriebsmotor. Der Positionierantrieb 28 kann ein Getriebe umfassen.

Die sozusagen eigentliche Bruchtrennvorrichtung 40 ist z.B. an einem an der Linearführung 27 oder der Führungsanordnung 26 linear geführten Schlitten 29 angeordnet, was nachfolgend noch deutlich wird.

Die Bruchtrennvorrichtung 40 umfasst ein erstes Spreizelement 41 und ein zweites Spreizelement 42 einer Spreizelementanordnung 48.

Die Spreizelemente 41, 42 können durch einen Betätigungskörper 43 nach radial außen verdrängt werden, wobei sie den Pleueldeckel 86 vom Pleuelfuß 85 des Pleuels 81 abtrennen. Dann entsteht im Bereich der Kerben 88 eine Bruchtrennfläche, wie oben bereits erläutert.

Die beiden Spreizelemente 41, 42 haben eine Außenumfangskontur, die mit einer Innenumfangskontur der Lageröffnung, des Auges 83, korrespondiert. Mithin können also die Spreizelemente 41, 42 formschlüssig passend am Innenumfang des Auges 83 anliegen. Die Spreizelemente 41, 42 bilden beispielsweise Spreizbacken.

Die Spreizelemente 41, 42 begrenzen eine Führungsaufnahme 49 zur Aufnahme und Führung des Betätigungskörpers 43.

Der Betätigungskörper 43 umfasst beispielsweise einen so genannten Spreizkeil.

An einem freien Endbereich des Betätigungskörpers 43 befindet sich eine Keilfläche 44, die mit einer Keilfläche 45 am Spreizelement 42 zusammenwirkt und an dieser anliegt. Die Keilflächen 44, 45 bilden eine Keilflächenanordnung 46 und somit ein Umlenkgetriebe. Der Betätigungskörper 43 wird durch einen Spreizantrieb 50 angetrieben.

Der Spreizantrieb 50 ist ebenso wie die Spreizelementanordnung 48 und der Betätigungskörper 43 an dem Schlitten 29 angeordnet.

Eine Stellachse oder Positionierachse 30, entlang derer der Schlitten 29 an der Führungsanordnung 26 entlang verstellt wird, verläuft winkelig, vorliegend rechtwinkelig zu einer Spreizachse 31, entlang derer der Pleueldeckel 86 vom Pleuelfuß 85 abgetrennt wird.

Der Spreizantrieb 50 umfasst einen hydraulischen Linearantrieb 51 mit mehreren, integral in einem Antriebsgehäuse 52 enthaltenen Komponenten, nämlich einem Hydraulikzylinder 53, eine Hydraulikpumpe 54 sowie einem Pumpenantriebsmotor 55 zum Antreiben der Hydraulikpumpe 54. Der Pumpenantriebsmotor 55 ist ein elektrischer Motor.

Der Hydraulikzylinder 53, die Hydraulikpumpe 54 sowie der Pumpenantriebsmotor 55 des Linearantriebs 51 bilden eine Antriebsbaueinheit 75.

Der Linearantrieb 51 umfasst in seinem Antriebsgehäuse 52 weiterhin einen Speicher 56 für ein Hydraulikfluid F, beispielsweise Hydrauliköl, das von der Hydraulikpumpe 54 unter Druck gesetzt wird, um den Hydraulikzylinder 53 anzutreiben. Zwischen der Hydraulikpumpe 54 und dem Hydraulikzylinder 53 bzw. dessen Bewegungskammer 63 verlaufen Fluidleitungen 57, 58. Die Fluidleitungen 57, 58 kommunizieren mit einer Rückstell-Teilkammer 59 und einer Antriebs-Teilkammer 60, in welche ein Kolben 61 des Hydraulikzylinders 53 die Bewegungskammer 63 unterteilt.

Wenn also das Hydraulikfluid F durch die Fluidleitung 57 in die Rückstell-Teilkammer 59 einströmt, wird der Kolben 61 in Richtung der Antriebs-Teilkammer 60 verstellt, wobei ein vor den Kolben 61 vorstehender Abtrieb 62, zum Beispiel eine Kolbenstange, den Betätigungskörper 43 von der Spreizelementanordnung 48 weg verstellt.

Wenn das Hydraulikfluid F durch die Fluidleitung 58 in die Antriebs-Teilkammer 60 einströmt, verstellt sie den Kolben 61 und mit diesem den Abtrieb 62 und somit auch den Betätigungskörper 43 von dem Antriebsgehäuse 52 weg, jedenfalls näher zu den Spreizelementen 41,42 hin, so dass diese das Motorbauteil 80 bruchtrennen.

Der Betätigungskörper 43 ist mit dem Abtrieb 62 fest verbunden, beispielsweise verschraubt, verschweißt oder dergleichen. Der Abtrieb 62 könnte auch den Betätigungskörper 43 unmittelbar integral bilden oder in anderen Worten könnte der Betätigungskörper 43 vom Abtrieb 62, also von einem Abtrieb eines erfindungsgemäßen Linearantriebs, gebildet sein.

Das Antriebsgehäuse 52 umfasst einen Motorgehäuseteil 64, in welchem der Pumpenantriebsmotor 55 angeordnet ist. In dem Motorgehäuseteil 64 ist ferner vorteilhaft eine elektronische Steuerung 65 zur Ansteuerung des Pumpenantriebsmotors 55 vorgesehen.

Die Steuerung 65 kann über elektrische Anschlüsse 66 angesteuert werden.

Die Steuerung 65 umfasst beispielsweise leistungselektronische Komponenten, so dass sie den Pumpenantriebsmotor 55 zweckmäßigerweise direkt ansteuern kann. Die Steuerung 65 umfasst ferner zweckmäßigerweise Regelungsmittel zur Regelung des Pumpenantriebsmotors 55, so dass sich dessen Drehzahl und Drehrichtung unmittelbar auf die Druckverhältnisse in den Fluidleitungen 57, 58 auswirkt. Dadurch wird der Hydraulikzylinder 53 direkt angesteuert, so dass er ist abhängig vom Fluid-Druck in den Fluidleitungen 57, 58 linear hin und her verfährt.

Die Anschlüsse 66 könnten reine Datenanschlüsse sein, d.h. beispielsweise Anschlüsse zur Verbindung mit einem Feldbus oder sonstige, zur Anbindung an eine Maschinensteuerung der Bruchtrennvorrichtung 40 geeignete Datenanschlüsse sein.

Eine weitere, in Kombination mit dieser "Datenvariante" mögliche Variante sieht vor, dass die Anschlüsse 66 zu elektrischen Energieversorgung des Linearantriebs 51 geeignet sind. Mithin genügen ausschließlich die Anschlüsse 66, um den Linearantrieb 51 anzusteuern. Fluidleitungen, die gegebenenfalls außerhalb des Antriebsgehäuses 52 verlaufen würden, sind also nicht vorhanden.

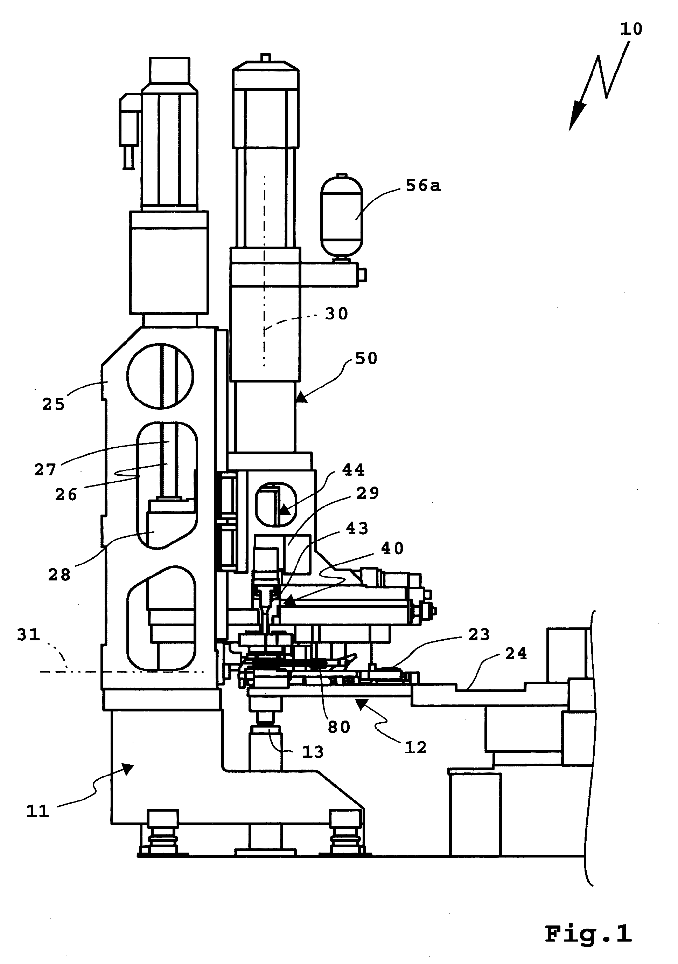

Allerdings ist in Figur 1 auch eine Variante dargestellt, bei der beispielsweise ein Speicher 56a, der die Funktion des Speichers 56 auch erfüllen könnte, außerhalb des Antriebsgehäuses 52 vorgesehen. Der Speicher 56a wird aber auch vom Schlitten 29 zusammen mit den anderen Komponenten des Linearantriebs 51 verstellt, ist also relativ zu diesen Komponenten ortsfest.

Mithin sind jedenfalls keine beweglichen Fluidleitungen zwischen beispielsweise einen Hydraulikfluid-Speicher notwendig, die eine relative Bewegung des Schlittens 29 zu der Maschinenbasis 11 oder eine relative Bewegung zu der eigentlichen Bruchtrennvorrichtung 40, nämlich dem Spreizantrieb 50 und der Spreizelementanordnung 48, als Ganzes mitmachen müssen.

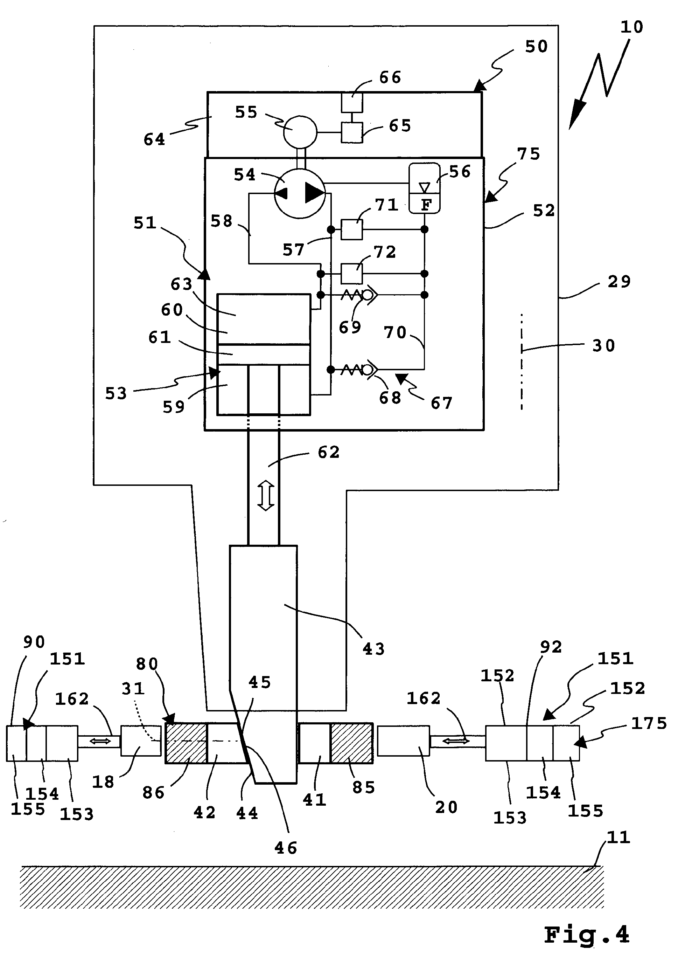

Bei der in Figur 4 schematisch dargestellten Ausführungsform ist offensichtlich, dass jedenfalls weder die Fluidleitungen 57, 58, noch der Speicher 56 mit der Maschinenbasis 11 verbunden sind, sondern als Ganzes an dem Schlitten 29 angeordnet sind und somit insgesamt die Stellbewegung an der Führungsanordnung 26 mitmachen.

Am Schlitten 29 ist ferner eine in der Zeichnung nicht sichtbare Mitnehmeranordnung zum Mitnehmen der Spreizelementanordnung 48 mit dem der Betätigungskörper 43 vorgesehen, um die Gesamtkonfiguration zwischen der mit dem Motorbauteil 80 in Eingriff stehenden Arbeitsposition (in Figur 4 dargestellt) und einer etwas oberhalb davon vorgesehenen Werkstückwechselposition zu positionieren, in welcher das Motorbauteil 80 gegen ein anderes zu bearbeitendes Motorbauteil 80 gewechselt werden kann.

Eine Ventilanordnung 67 an Bord des Linearantriebs 51 stellt sicher, dass die Druckverhältnisse in den Fluidleitungen 57, 58 günstig sind. Beispielsweise sind Rückschlagventile 68, 69 mit der Fluidleitungen 57, 58 verbunden, die jeweils ausgangsseitig mit einer Fluidleitung 70 kommunizieren, die an den Speicher 56 angeschlossen ist. An die Fluidleitungen 57, 58 sind ferner Überdruckventile 71, 72 angeschlossen, die ebenfalls mit der Fluidleitung 70 verbunden sind.

Die Abstützeinrichtungen 14-17 könnten an sich elektrische Stützantriebe haben. Vorliegend sind jedoch hydraulische Linearantriebe 151 als Stützantriebe 90-93 vorgesehen, mit denen die Stützelemente 20, 21 sowie 18, 19 von einer Stützstellung, in der sie in Anlage mit dem Motorbauteil 80 sind oder jedenfalls dieses abstützen, wenn die Bruchtrennung durchgeführt wird, und einer Lösestellung verstellbar sind, bei der das Motorbauteil 80 gegen ein anderes Motorbauteil 80 auswechselbar ist. Die Stützstellung kann vorsehen, dass ein gewisser kleiner Abstand zwischen einerseits den Stützelementen 18-21 und andererseits dem Motorbauteil 80 vorgesehen ist, so dass für den Bruchtrennvorgang ein Bewegungsspiel vorgesehen ist.

Auf die einzelnen Komponenten der Linearantriebe 151 soll hier nicht detailliert eingegangen werden. Im Prinzip kann der Linearantrieb 151 genau gleich aufgebaut sein wie der Linearantrieb 51, der bereits erläutert worden ist. Zur Verdeutlichung des zweckmäßigen modularen Konzepts sind jedoch einzelne, in einer Reihenrichtung nebeneinander angeordnete Komponenten der Linearantriebe 151 erläutert, nämlich ein Hydraulikzylinder 153, an den unmittelbar eine Hydraulikpumpe 154 angebaut ist, die ihrerseits wiederum von einem integral im Antriebsgehäuse 152 enthaltenen Pumpenantriebsmotor 155 angetrieben wird.

Die Komponenten 153, 154, 155 bilden eine Antriebsbaueinheit 175.

Selbstverständlich könnte auch ein geschlossenes, sämtliche Komponenten 153-155 enthaltendes Antriebsgehäuse, anstelle des Antriebsgehäuses 152, vorgesehen sein.

## Patentansprüche

1. Bruchtrennvorrichtung zum Bruchtrennen eines Motorbauteils (80), insbesondere eines Pleuels (81), mit einer Spreizelementanordnung (48) mit mindestens einem ersten Spreizelement (41) und einem Betätigungskörper (43) zum Betätigen des mindestens einen ersten Spreizelements (41) in eine Spreizstellung zum Abtrennen einer ersten Komponente des Motorbauteils (80), insbesondere eines Pleueldeckels (86), von einer zweiten Komponente des Motorbauteils (80), insbesondere einem Pleuelfuß (85), wobei zwischen dem Betätigungskörper (43) und dem mindestens einen ersten Spreizelement (41) ein Umlenkgetriebe, insbesondere eine Keilflächenanordnung (46), vorgesehen ist und der Betätigungskörper (43) durch einen Spreizantrieb (50) antreibbar ist, und wobei die Bruchtrennvorrichtung (40) eine Werkstück-Halteanordnung (12) mit mindestens einer Abstützeinrichtung (14-17) zum Abstützen des Motorbauteils (80) für das Bruchtrennen aufweist, **dadurch gekennzeichnet, dass** ein Stützantrieb (90-93) der Abstützeinrichtung (14-17) zum Verstellen eines Stützelements (18-21) in eine das Motorbauteil (80) abstützende Stützstellung und/oder der Spreizantrieb (50) einen hydraulischen Linearantrieb (51; 151) aufweist, der als eine integrierte Antriebsbaueinheit (75; 175) einen anhand eines Hydraulikfluids (F) antreibbaren Hydraulikzylinder (53, 153) und eine Hydraulikpumpe (54; 154) zum Erzeugen eines Antriebsdrucks des Hydraulikfluids (F) umfasst.

2. Bruchtrennvorrichtung nach Anspruch 1, **dadurch gekennzeichnet, dass** die Antriebsbaueinheit (75; 175) ein geschlossenes System für das Hydraulikfluid (F) bildet und/oder die Antriebsbaueinheit (75; 175) einen geschlossenen Kreislauf für das Hydraulikfluid (F) aufweist und/oder keine Fluidleitung (57, 58, 70) für das Hydraulikfluid (F) außerhalb eines Gehäuses (52; 152) der Antriebsbaueinheit (75; 175) verläuft und/oder keine eine Relativbewegung des Linearantriebs (51; 151) zu einer Maschinenbasis (11) der Bruchtrennvorrichtung mitmachende Fluidleitungen (57, 58, 70) vorhanden ist.

3. Bruchtrennvorrichtung nach Anspruch 1 oder 2, **dadurch gekennzeichnet, dass** die Antriebsbaueinheit (75; 175) des Linearantriebs (51; 151) einen insbesondere in einem Gehäuse (52; 152) der Antriebsbaueinheit (75; 175) integral enthaltenen elektrischen Pumpenantriebsmotor (55; 155) umfasst und/oder die Antriebsbaueinheit (75; 175) ausschließlich elektrische Anschlüsse (66) zur elektrischen Energieversorgung aufweist.

4. Bruchtrennvorrichtung nach einem der vorhergehenden Ansprüche, **dadurch gekennzeichnet, dass** die Antriebsbaueinheit (75; 175) eine insbesondere als Sicherheitsbeschaltung ausgestaltete Ventilanordnung (67) und/oder eine hydraulische Regelungseinrichtung zur Drehzahlregelung der Hydraulikpumpe (54; 154) und/oder zur Lageregelung und/oder zu einer Druckregelung des Hydraulikfluids (F) umfasst.

5. Bruchtrennvorrichtung nach einem der vorhergehenden Ansprüche, **dadurch gekennzeichnet, dass** die Antriebsbaueinheit (75; 175) einen insbesondere in ein Gehäuse (52; 152) der Antriebsbaueinheit (75; 175) integral eingebundenen Speicher (56), insbesondere einen Ausgleichsbehälter, für das Hydraulikfluid (F) aufweist.

6. Bruchtrennvorrichtung nach einem der vorhergehenden Ansprüche, **dadurch gekennzeichnet, dass** der Hydraulikzylinder (53, 153) und die Hydraulikpumpe (54; 154) und insbesondere mindestens eine weitere Komponente, insbesondere ein Speicher (56) für das Hydraulikfluid (F) und/oder eine Ventilanordnung (67), in einer Reihe nebeneinander angeordnet und/oder koaxial, insbesondere mit einem Abtrieb (62) des Hydraulikzylinders (53, 153), sind.

7. Bruchtrennvorrichtung nach einem der vorhergehenden Ansprüche, **dadurch gekennzeichnet, dass** die Spreizelementanordnung (48) einschließlich des Spreizantriebs (50) und/oder die Werkstück-Halteanordnung (12) mittels eines Positionierantriebs (28) in eine zur Bearbeitung des Motorbauteils (80) durch die Spreizelementanordnung (48) geeignete Arbeitsposition relativ zueinander verstellbar sind.

8. Bruchtrennvorrichtung nach Anspruch 7, **dadurch gekennzeichnet, dass** der Positionierantrieb (28) mindestens einen elektrischen Antriebsmotor, insbesondere einen elektrischen Linearantrieb (51; 151), oder ausschließlich elektrische Antriebsmotoren aufweist.

9. Bruchtrennvorrichtung nach einem der vorhergehenden Ansprüche, **dadurch gekennzeichnet, dass** die Spreizelementanordnung (48) einschließlich des Spreizantriebs (50) an einem Schlitten (29) angeordnet ist, der zu der Werkstück-Halteanordnung (12) hin und von dieser weg, insbesondere linear, verstellbar ist.

10. Bruchtrennvorrichtung nach einem der vorhergehenden Ansprüche, **dadurch gekennzeichnet, dass** eine Spreizachse (31), entlang derer die Spreizelementanordnung (48) die erste Komponente des Motorbauteils (80) von der zweiten Komponente des Motorbauteils (80) trennt, und eine Positionierachse (30) oder Stellachse, entlang derer die Spreizelementanordnung (48) und/oder die Werkstück-Halteanordnung (12) in eine zur Bearbeitung des Motorbauteils (80) durch die Spreizelementanordnung (48) geeignete Arbeitsposition relativ zueinander verstellbar sind, zueinander winkelig sind, insbesondere rechtwinkelig.

11. Bruchtrennvorrichtung (40) nach einem der vorhergehenden Ansprüche, **dadurch gekennzeichnet, dass** die Spreizelementanordnung (48) zur Anordnung in einer Lageröffnung des Motorbauteils (80), insbesondere in einem Auge (83) eines Pleuels (81), ausgestaltet ist.

12. Bruchtrennvorrichtung (40) nach einem der vorhergehenden Ansprüche, **dadurch gekennzeichnet, dass** sie einen Bestandteil einer Werkzeugmaschine (10) und/oder eines Bearbeitungszentrums bildet.

13. Bruchtrennvorrichtung nach einem der vorhergehenden Ansprüche, **dadurch gekennzeichnet, dass** sie eine Werkstück-Fördereinrichtung, insbesondere einen Rundtisch (22) oder einen Kettenförderer, zum Vorfördern der Motorbauteile (80) zu der Werkstück-Halteanordnung (12) hin und/oder von der Werkstück-Halteanordnung (12) weg aufweist.

14. Bruchtrennvorrichtung nach einem der vorhergehenden Ansprüche, **dadurch gekennzeichnet, dass** sie für einen manuellen Werkstückwechsel ausgestaltet ist.
